Europäisches Patentamt

European Patent Office

Office européen des brevets

(11) Publication number: **0 338 180 B1**

(12) # EUROPEAN PATENT SPECIFICATION

(45) Date of publication of patent specification: **23.09.92**    (51) Int. Cl.⁵: **G01L 1/18**, G01L 9/06, G01B 7/18

(21) Application number: **88830166.0**

(22) Date of filing: **21.04.88**

(54) **An electrical force and/or deformation sensor, particularly for use as a pressure sensor.**

(43) Date of publication of application:
**25.10.89 Bulletin 89/43**

(45) Publication of the grant of the patent:
**23.09.92 Bulletin 92/39**

(84) Designated Contracting States:
**AT BE CH DE ES FR GB GR IT LI LU NL SE**

(56) References cited:
AT-A- 316 894          DE-A- 2 036 901
DE-A- 3 207 833        GB-A- 1 481 459
GB-A- 2 063 560        US-A- 3 697 918
US-A- 4 528 855        US-A- 4 654 621

(73) Proprietor: **MARELLI AUTRONICA S.p.A.**
**Via Griziotti 4**
**I-20145 Milano(IT)**

(72) Inventor: **Dell'Acqua, Roberto**
**Via N. Sauro 25**
**I-27100 Pavia(IT)**

(74) Representative: **Ouinterno, Giuseppe et al**
**c/o Jacobacci-Casetta & Perani S.p.A. Via**
**Alfieri, 17**
**I-10121 Torino(IT)**

EP 0 338 180 B1

## Description

The present invention relates to an electrical force and/or deformation sensor, particularly for use as a pressure sensor, of the kind defined in the first part of Claim 1.

US-A-4 528 855 and US-A-4 654 621 disclose transducers of this kind in which the recessed support plate is a chip of a semiconductor material and the sensitive elements are semiconductor strain gauges integral with the said chip. The manufacture of these transducers is complicated and expensive because of the rather costly basic materials used and the quite sophisticated technologies required.

In other known sensors of the previously-specified type used, in particular, as pressure sensors, the piezoresistive sensitive elements are deposited by silk-screen printing on one face of a thin sheet made, for example, from a ceramic material. This sheet is then clamped between two rigid half-shells, also made, for example, from a ceramic material. The too half-shells together form a capsule and one of them usually has an opening for connection to an environment whose pressure is to be detected.

These known sensors thus have a plurality of parts (sheet, half-shells) which must be glued together, for example, with the use of a vitreous mastic cured in an oven. Moreover, in these known sensors, the connection of the piezoresistive elements to external supply and processing circuits involves the deposition, for example, by silk-screen printing, of conductive strips on the deformable sheet which carries the piezoresistive elements and on at least one of the half-shells which form the capsule. The connection of the conductive strips of this half-shell to the conductive strips of the sheet which carries the piezoresistive elements thus requires special devices and operations, for example, the use of metallised holes in the half-shell.

In view of the above, the known sensors are generally complex and expensive to produce.

The object of the present invention is to produce an electrical sensor of the type defined above which has a very simple structure, small dimensions and weight, and a lower production cost.

According to the invention this object is achieved by means of an electrical force and/or deformation sensor having the features defined in Claim 1.

In the sensor according to the invention, the support structure is reduced to a single ceramic piece. The structure of the sensor is greatly simplified. Moreover, both the piezoresistive elements and the conductive strips for their connection to supply and/or processing circuits are deposited by silk-screen printing on a single surface, that is, on the face of the rigid plate opposite that in which the recess is formed.

Further characteristics and advantages of the sensor according to the invention will become clear from the detailed description which follows with reference to the appended drawings, providing purely by way of non-limiting example, in which:

Figure 1 is a perspective view of a sensor according to the present invention,

Figure 2 is a section taken on the line II-II of Figure 1, and

Figure 3 is a section similar to Figure 2, showing a different embodiment of the sensor according to the invention.

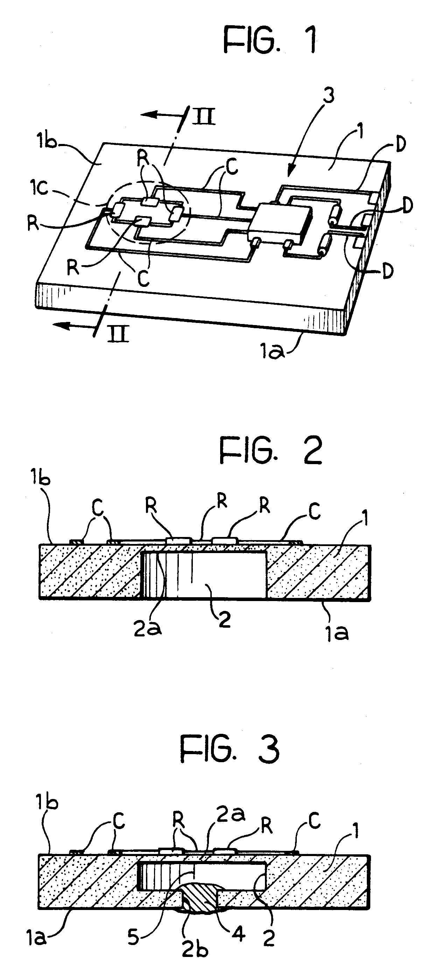

With reference to Figure 1, an electrical force and/or deformation sensor, and in particular a pressure sensor, according to the present invention comprises a rigid support plate 1 made from a ceramic material. As can be seen in Figure 2 in particular, a recess 2 is formed in one face of the plate 1, the bottom wall 2a of which is thin and is resiliently deformable under the action of a force or pressure to be measured.

The plate 1 may have a thickness, for example, of 1.5-3 mm. The thickness of the bottom wall 2a of the recess is, for example, 150-200 microns.

The recess 2 is preferably cylindrical or slightly frusto-conical in shape with a cross-section which decreases progressively towards the bottom wall 2a.

In the embodiment illustrated, four thick-film resistors R which act as piezoresistive sensitive elements are deposited on the other face 1b of the plate 1 by silk-screen printing. These resistors may be connected to each other, for example, to form a Wheatstone bridge circuit. The connections between the various resistors are formed by conductive strips C also deposited on the face 1b of the plate by silk-screen printing techniques.

The resistors R are deposited on an area, indicated 1c in Figure 1, which corresponds to the bottom wall 2a of the recess 2. This wall thus acts as a resiliently deformable element which, as a result of forces or pressures to be measured, can cause corresponding deformations of the resistors R and consequent variations in their resistance.

The resistors R are connected to a processing circuit, generally indicated 3 in Figure 1, which may, to advantage, be produced, for example, by hybrid circuit technology on that face 1b of the plate 1 to which the resistors are applied. The connection between the resistors R and the processing circuit 3 is achieved by means of conductive strips C deposited by silk-screen printing.

The circuit 3 may include, for example, an operational amplifier for amplifying the voltage between two opposite vertices of the bridge circuit formed by the resistors.

2

The circuit 3 may be connected to circuits outside the sensor and to a voltage supply by means of further conductive strips D (Figure 1).

The sensor shown in Figures 1 and 2 has an open recess 2 and is intended, for example, to enable the measurement of relative pressures. In order to measure the relative pressure in a particular environment, the recess 2 may be connected to the environment, for example, by means of a small tube one end of which is force-fitted into or otherwise fixed to the mouth of the recess 2.

In order to measure absolute pressures, the above-described sensor may be modified in the manner illustrated in Figure 3. In this embodiment, the plate 1 also has a recess 2, but with a mouth opening 2b of smaller transverse dimensions than those of the recess. This opening is closed and tightly sealed, for example, by means of the deposition of a drop of tin 4.

In this way, a cavity 5 closed with a gas-tight seal is defined within the plate 1. If a vacuum is created in this cavity by known means, the sensor thus produced will provide indications of the absolute pressures measured.

The sensor according to the invention has numerous advantages.

In the first place, the structure of the sensor comprises only one piece which can easily be produced, for example, by moulding or sintering. Mounting and gluing operations are therefore not required, as in prior-art sensors.

A further advantage lies in the fact that all the silk-screen printing operations are carried out on a single surface, that is, on the face 1b of the support plate 1.

Moreover, the overall dimensions and weight of the sensor are extremely small and the manufacture of the sensor is generally simpler and more economical.

## Claims

1. An electrical force and/or deformation sensor, particularly for use as a pressure sensor, comprising a support structure (1) including an element (2a) which is resiliently deformable by a force or pressure to be measured and on which at least one piezoresistive sensitive element (R) is deposited, the structure also carrying electrical conductor means (C) connected to the at least one sensitive element (R) and adapted to enable its connection to supply and processing circuit means (3); the support structure including a rigid plate (1) in one face (1a) of which is formed a recess (2) whose bottom wall (2a) is thin and is resiliently deformable under the action of a force or pressure to be measured, the at least one sensitive element (R) being provided on the other face (1b) of the plate (1) in correspondence with the bottom wall (2a) of the recess (2), the conductor means (C) also being provided on the other face (1b) of the plate (1); characterised in that said rigid plate (1) is made of a ceramic material and in that said at least one piezoresistive sensitive element (R) is a thick-film resistor deposited by silk-screen printing on said plate (1) and the conductor means (C) comprise conductive strips also deposited by silk-screen printing on said other face (1b) of the plate (1).

2. A sensor according to Claim 1, particularly for the measurement of relative pressures, characterised in that the recess (2) is open.

3. A sensor according to Claim 2, characterised in that the recess (2) is essentially cylindrical in shape.

4. A sensor according to Claim 2, characterised in that the recess (2) is essentially frusto-conical or frusto-pyramidal with transverse dimensions which decrease towards the bottom wall (2a).

5. A sensor according to Claim 1, particularly for the measurement of absolute pressures, characterised in that the inlet opening (2b) of the recess (2) is closed by gas-tight sealing means (4) so as to define a closed cavity (5) in the thickness of the plate (1), in which a vacuum can be created.

6. A sensor according to any one of the preceding claims, in which the support structure (1) also carries circuit means (3) for supply and/or processing of the signals provided by the at least one sensitive element (R), characterised in that the circuit means (3) are applied to that the face (1b) of the plate (1) on which the at least one sensitive element (R) is deposited.

7. A sensor according to Claim 6, characterised in that the circuit means are produced by hybrid circuit technology.

## Patentansprüche

1. Elektrischer Kraft- und/oder Deformationsfühler, der besonders für eine Verwendung als Druckfühler geeignet ist, wobei der Fühler einen Tragaufbau (1) enthält, der ein Element (2a) aufweist, das durch eine Kraft oder einen Druck, die gemessen werden sollen, elastisch verformbar ist, und auf dem zumindest ein Piezowiderstands-Meßfühler (R) aufgebracht wird, wobei der Aufbau weiters eine elektrische Leitereinrichtung (C) trägt, die mit dem zumindest einen Meßfühler (R) verbunden und so eingerichtet ist, daß dieser mit einem Speise- und Verarbeitungskreis (3) verbunden werden kann;

wobei der Tragaufbau eine steife Platte (1) aufweist, bei der auf einer Fläche (1a) eine Ausnehmung (2) ausgebildet ist, deren Bodenwand (2a) dünn ist und unter der Wirkung einer Kraft oder eines Drucks elastisch verformt werden kann, die gemessen werden sollen, wobei der zumindest eine Meßfühler (R) auf der anderen Fläche (1b) der Platte (1) in Übereinstimmung mit der Bodenwand (2a) der Ausnehmung (2) vorgesehen ist, wobei die Leitereinrichtung (C) weiters auf der anderen Fläche (1b) der Platte (1) vorgesehen ist; dadurch gekennzeichnet, daß die steife Platte (1) aus einem keramischen Material besteht, und daß zumindest ein Piezowiderstands-Meßfühler (R) ein Dickfilmwiderstand ist, der im Siebdruck auf der Platte (1) aufgebracht wird, und wobei die Leitereinrichtung (C) Leiterbahnen enthält, die gleichfalls im Siebdruck auf der anderen Fläche (1b) der Platte (1) aufgebracht werden.

2. Fühler gemäß Anspruch 1, besonders zum Messen von relativen Drücken, dadurch gekennzeichnet, daß die Ausnehmung (2) offen ist.

3. Fühler gemäß Anspruch 2, dadurch gekennzeichnet, daß die Ausnehmung (2) im wesentlichen zylindrisch ausgebildet ist.

4. Fühler gemäß Anspruch 2, dadurch gekennzeichnet, daß die Ausnehmung (2) im wesentlichen kegelstumpfförmig oder pyramidenstumpfförmig ausgebildet ist, wobei die Querabmessungen zur Bodenwand (2a) kleiner werden.

5. Fühler gemäß Anspruch 1, besonders für die Messung von absoluten Drücken, dadurch gekennzeichnet, daß die Einlaßöffnung (2b) der Ausnehmung (2) mit einer gasdichten Dichtungseinrichtung (4) verschlossen wird, um in der Dicke der Platte (1) einen geschlossenen Hohlraum (5) auszubilden, in dem ein Unterdruck erzeugt werden kann.

6. Fühler gemäß jedem der bisherigen Ansprüche, wobei der Tragaufbau (1) weiters einen Schaltkreis (3) trägt, um die Signale zu liefern und/oder zu verarbeiten, die von dem zumindest einen Meßfühler (R) geliefert werden, dadurch gekennzeichnet, daß der Schaltkreis (3) auf jener Fläche (1b) der Platte (1) aufgebracht wird, auf der der zumindest eine Meßfühler (R) aufgebracht wird.

7. Fühler gemäß Anspruch 6, dadurch gekennzeichnet, daß der Schaltkreis mit einer Hybridschaltungstechnik erzeugt wird.

**Revendications**

1. Capteur électrique de force et/ou de déformation, utilisé en particulier comme capteur de pression, comportant une structure support (1) comprenant un élément (2a) qui est élastiquement déformable sous l'action d'une force ou d'une pression à mesurer et sur lequel est déposé au moins un élément sensible piezorésistant (R), la structure portant également des moyens (C) formant conducteurs électriques reliés à l'élément sensible (R), dont il y a au moins un, et conçus pour permettre leur liaison avec le moyen (3) formant circuit d'alimentation et circuit de traitement;

la structure support comprenant une plaque rigide (1) dont la première face (1a) présente une niche (2) dont la paroi de fond (2a) est fine et élastiquement déformable sous l'action d'une force ou d'une pression à mesurer, l'élément sensible (R), dont il y a au moins un, étant placé sur l'autre face (1b) de la plaque (1), en correspondance avec la paroi du fond (2a) de la niche (2), les moyens (C) formant conducteurs étant également placés sur l'autre face (1b) de la plaque (1); capteur caractérisé par le fait que ladite plaque rigide (1) est faite d'un matériau céramique et par le fait que ledit élément sensible piézorésistant (R), dont il y a au moins un, est une résistance en film épais déposée par impression sérigraphique sur ladite plaque (1) et que les moyens (C) formant conducteurs sont constitués de rubans conducteurs également déposés par impression sérigraphique sur ladite autre face (1b) de la plaque (1).

2. Capteur selon la revendication 1, en particulier pour la mesure des pressions relatives, caractérisé par le fait que la niche (2) est ouverte.

3. Capteur selon la revendication 2, caractérisé par le fait que la niche (2) est de forme essentiellement cylindrique.

4. Capteur selon la revendication 2, caractérisé par le fait que la niche (2) a essentiellement la forme d'un tronc de cône ou d'un tronc de pyramide dont les dimensions transversales vont en diminuant en direction de la paroi du fond (2a).

5. Capteur selon la revendication 1, en particulier pour la mesure des pressions absolues, caractérisé par le fait que l'ouverture d'entrée (2a) de la niche (2) est fermée par des moyens (4) d'étanchéité au gaz de façon à définir, dans l'épaisseur de la plaque (1), une cavité close (5) dans laquelle le vide peut être crée.

6. Capteur selon l'une quelconque des revendications précédentes, dans lequel la structure support (1) porte également des moyens (3) formant circuits pour fournir la tension aux signaux produits par l'élément sensible (R), dont il y a au moins un, et/ou pour traiter ces signaux, capteur caractérisé par le fait que les moyens formant circuits (3) sont appliqués sur la face (1b) de la plaque (1) sur laquelle est déposé l'élément sensible (R) dont il y a au moins un.

7. Capteur selon la revendication 6, caractérisé par le fait que les moyens formant circuits sont produits par la technologie des circuits hybrides.

# FIG. 1

# FIG. 2

# FIG. 3